## Europäisches Patentamt
## European Patent Office
### Office européen des brevets

(19)

(11) Numéro de publication: **0 010 475**
**A2**

(12) **DEMANDE DE BREVET EUROPEEN**

(21) Numéro de dépôt: **79400705.4**

(22) Date de dépôt: **05.10.79**

(51) Int. Cl.³: **F 16 S 3/00**
**F 16 B 12/28**
**//A47B96/14**

(30) Priorité: **05.10.78 FR 7828501**
**04.10.79 FR 7924707**

(43) Date de publication de la demande:
**30.04.80 Bulletin 80/9**

(84) Etats Contractants Désignés:
**BE DE GB IT NL**

(71) Demandeur: **Stoltz, Jean**
**50, rue de l'Eglise**
**F-77116 Ury(FR)**

(71) Demandeur: **Société NETIX S.A.**
**50, rue de l'Eglise**
**F-77116 Ury(FR)**

(72) Inventeur: **Stoltz, Jean**
**50, rue de l'Eglise**
**F-77116 Ury(FR)**

(74) Mandataire: **Dejoux, André**
**15, rue Lahanal**
**F-75015 Paris(FR)**

(54) **Ensemble de profilés et pièces annexes pour la réalisation de mobilier.**

(57) Ensemble de profilés et pièces annexes constitué par un profilé principal dont la section est en forme de H dont les extrémitiés sont pliées et rapprochées de façon à former deux faces parallèles (1,2) comportant chacune une fente (14,15) et dont l'aile de liaison ou âme (3a,3b) comporte en son centre un tube (20) pouvant être taraudé. La section de ce profilé présente deux axes de symétrie perpendiculaires l'un à l'autre (XX', YY') passant par le centre du tube (20), ce qui permet l'assemblage à coupe d'onglet suivant l'un ou l'autre de ces axes de symétrie. La fixation s'effectue au moyen d'une vis passant dans un trou percé dans l'extrémité de l'un des profilés et se vissant dans un insert (49) vissé lui-même dans l'extrémité du tube central de l'autre profilé. Les fentes (14,15) sont fermées par un profilé de fermeture (25, 38, 40) comportant deux ailettes (26,27), se verrouillant par déformation élastique sur les bords des fentes (14,15). L'utilisation du profilé principal sous forme d'entretoises (55,56) permet d'assembler des tablettes (57) disposées entre ces entretoises, lesquelles sont serrées par une tige filetée (58) vissée dans le tube du profilé après interposition d'une rondelle comprimable (62).

L'invention s'applique à réalisation de tables diverses, de bureaux, de meubles de rangement, de rayonnages, de bibliothèques et d'armoires, ainsi qu'à l'encardrement de fenêtres, de balcons et terrasses et à la réalisation de mains courantes.

FIG. 1

FIG. 9

FIG. 5

Ensemble de profilés et pièces annexes pour la réalisation de mobilier

L'invention concerne un ensemble de profilés et pièces annexes dans lequel le profilé principal, de section ouverte, est constitué en barres d'alliage léger obtenues par filage à la presse, s'assemblant par morceaux pour former l'ossature de structures à vocations diverses coopérant avec des pièces annexes d'habillage de ces structures.

Pour la réalisation de telles structures, on connaît déjà de nombreux types de profilés correspondant au préambule de la revendication 1. Pour assembler ces profilés par morceaux, il est nécessaire d'utiliser des pièces annexes d'assemblage qui sont glissées dans les fentes longitudinales, équerres ou blocs préalablement percés et/ou taraudés et devant être positionnés dans les fentes pour assujettir les morceaux de profilés. Ces assemblages demandent une préparation. Avec ces profilés, les assemblages bout-à-bout en interposant une tablette entre les profilés sont impossibles ou très difficiles à réaliser.

La présente invention a pour but d'apporter un remède à ces difficultés. L'invention telle qu'elle est caractérisée dans les revendications, résout le problème consistant à assembler des morceaux de profilés sans pièce intermédiaire, ainsi qu'à permettre l'assemblage de tablettes parallèles entre des morceaux de profilé utilisés comme entretoises. De plus, l'agencement de la section du profilé principal permet son assemblage en équerre à coupe d'onglet indifféremment selon l'un ou l'autre des côtés de la section. En outre, la fixation de panneaux ou de dessus de tables directement sur l'extrémité du profilé peut s'effectuer également sans pièce intermédiaire.

Les avantages obtenus grâce à cette invention consistent essentiellement en ceci que les procédés d'assemblage d'ossatures sont très simplifiés, rapides à mettre en oeuvre, robustes car ils s'effectuent suivant l'axe du profilé, de plus leur esthétique est améliorée par des profilés annexes de fermeture des fentes.

Dans le texte qui suit, l'invention est exposée plus en détail en référence aux dessins représentant un mode préférentiel d'exécution, dans lesquels:

    - la figure 1 représente, en section droite, le profilé principal selon l'invention,

    - les figures 2, 3 et 4 représentent des variantes de ce profilé munies de profilés annexes de fermeture.

- les figures 5,6 et 7,8 montrent le mode d'assemblage à coupe d'onglet du profilé principal en élévation et en vue de dessus.

- la figure 9 représente la fixation d'une tablette serrée entre deux morceaux du profilé principal utilisé comme entretoise,

- la figure 10 illustre l'utilisation du mode de fixation de tablettes de la fig.9 pour la réalisation d'une table avec ou sans roulette,

- la figure 11 montre le profilé principal,côté ouverture,muni d'un profilé annexe de section en forme de T, formant un support d'étagère,

- les figures 12 et 13 montrent le mode d'assemblage à coupe droite de morceaux de profilé principal ,

- les figures 14,15 sont un exemple de réalisation de table utilisant une pièce annexe de fixation du plateau de table,

- les figures 16,17 et 18 montrent les pièces annexes servant à la fixation de plateaux de tables en bout du profilé principal,

- les figures 19, 20 et 21 montrent un exemple de réalisation de rayonnage simplifié,

- les figures 22 et 23 montrent le détail de fixation du profilé annexe en T sur la fente du profilé principal

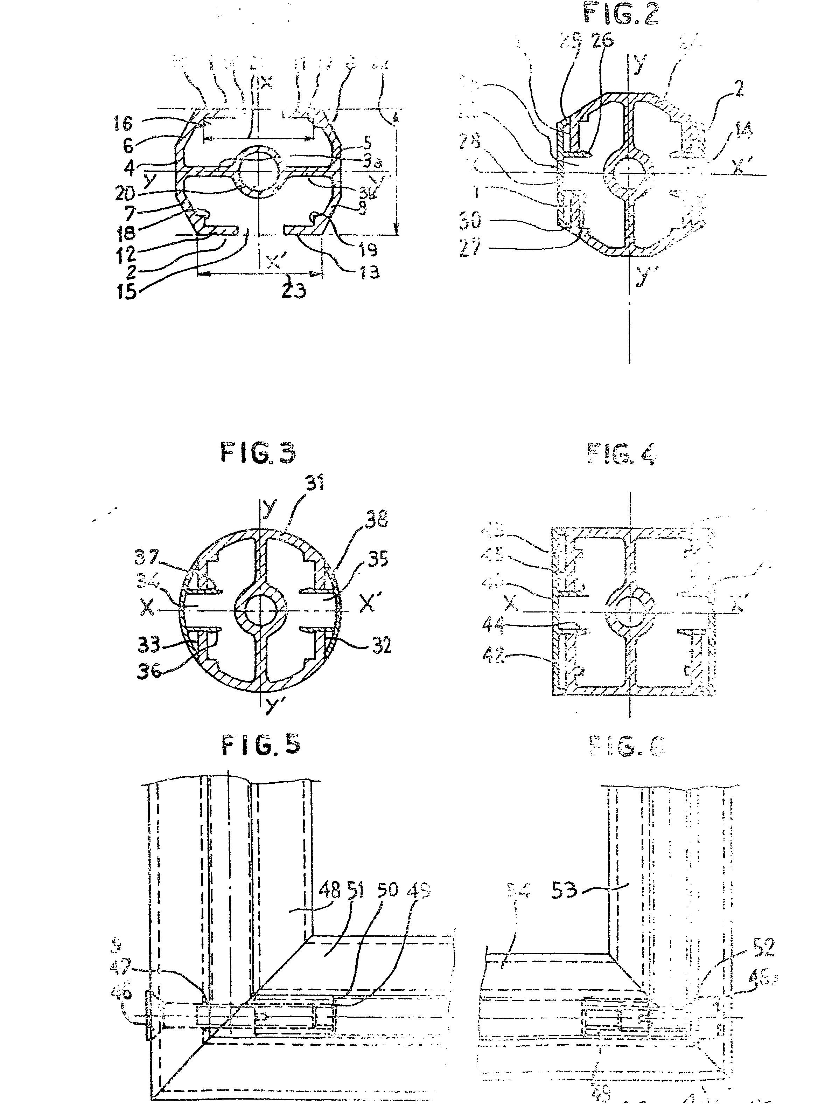

Tel qu'il est représenté en section sur la figure 1, le profilé principal, en forme de H, comporte des extrémités pliées et rapprochées de façon à former deux faces d'appui 1,2 parallèles entre elles et parallèles à l'âme 3 disposée sur un axe de symétrie YY' perpendiculaire à un second axe de symétrie XX'. Les côtés 4,5 du H, perpendiculaires à l'axe YY', sont disposés chacun symétriquement à l'axe XX' suivant deux parties 6,7 et 8,9, se terminant par les bords 10,11 et 12,13, lesquels déterminent 2 à 2, symétriquement à l'axe XX', les fentes longitudinales opposées 14,15. Les toiles 10,11 et 12,13, sont d'épaisseur identique à faces parallèles et coopèrent respectivement avec les épaulements internes perpendiculaires 16,17 et 18,19. Ces épaulements définissent chacun un logement interne de largeur 21. L'épaisseur du profilé 22 est préférablement identique à la largeur 23 des faces d'appui 1,2. L'âme 3, formant la branche interne du H, comporte en son milieu, au croisement des axes XX' et YY', une partie tubulaire 20 pouvant être taraudée dans ses extrémités.

Sur la figure 2 représentant, en section droite, le profilé principal 24, on a montré un exemple de profilé annexe 25, fabriqué par filage à la presse, dans un alliage léger, se montant élastiquement et se verrouillant sur le bord des fentes 14,15 du profilé principal au moyen de deux ailettes 26,27, se terminant par une rampe légère assurant le verrouillage.

Son âme 28 se raccorde aux deux extrémités sur les pentes du profilé 24 au moyen de courtes ailettes 29,30 prenant appui sur l'extrémité des faces 1a, 1b. Ce même profilé de fermeture 25 se monte indifféremment sur les faces d'appui 1 ou 2.

La figure 3 montre une variante de section du profilé principal 31 en H, mais dont les ailes sont de forme cylindrique se terminant par des ailes repliées parallèlement à l'axe de symétrie YY' et définissant, comme sur la figure 1, deux faces d'appui parallèles 32,33 ouvertes par les fentes 34,35, dans lesquelles sont engagées les ailettes 36,37 d'un profilé de fermeture 38 de forme extérieure cylindrique de même rayon que celui du profilé principal 31, de façon à obtenir des montants parfaitement cylindriques pour les rayonnages, piètements de tables etc...

La figure 4 montre une autre variante de profilé principal 39, présentant un diamètre carré sur l'extérieur des faces des profilés de fermeture des fentes 40,41, se montant de la même façon que sur les figures 2 et 3 en ménageant les espaces 42,43 pour donner de la longueur et donc de l'élasticité aux ailettes 44,45 de verrouillage.

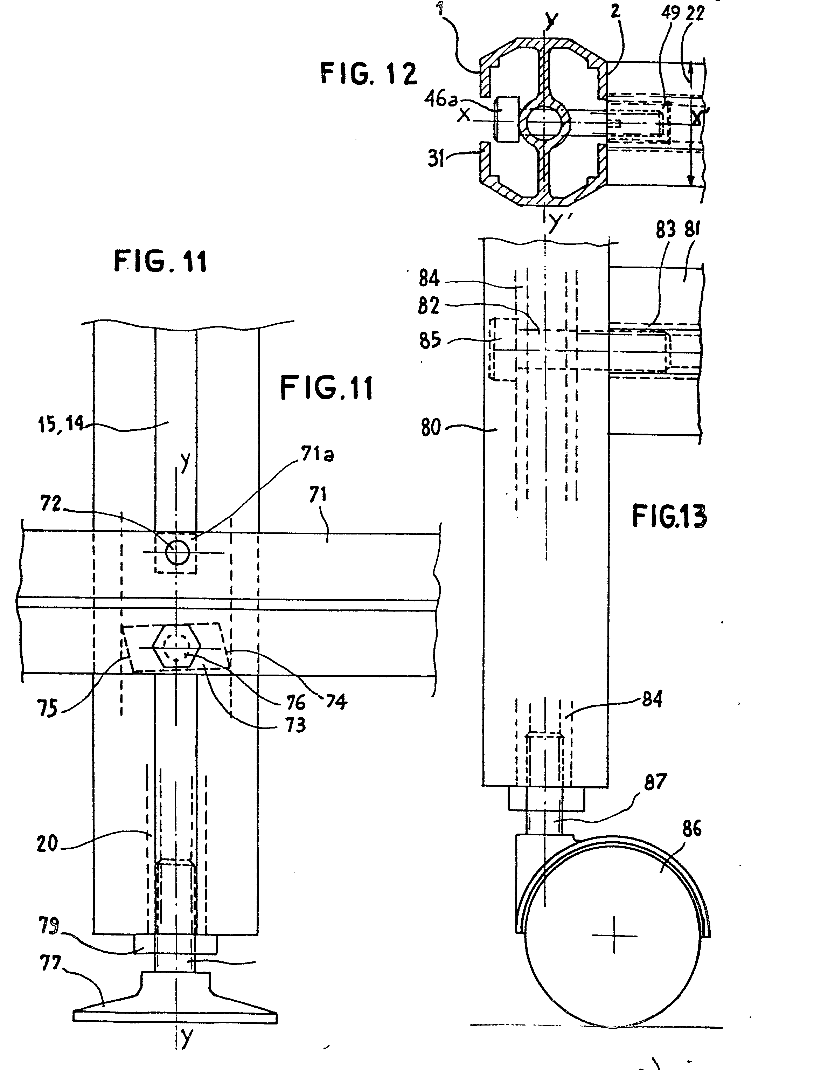

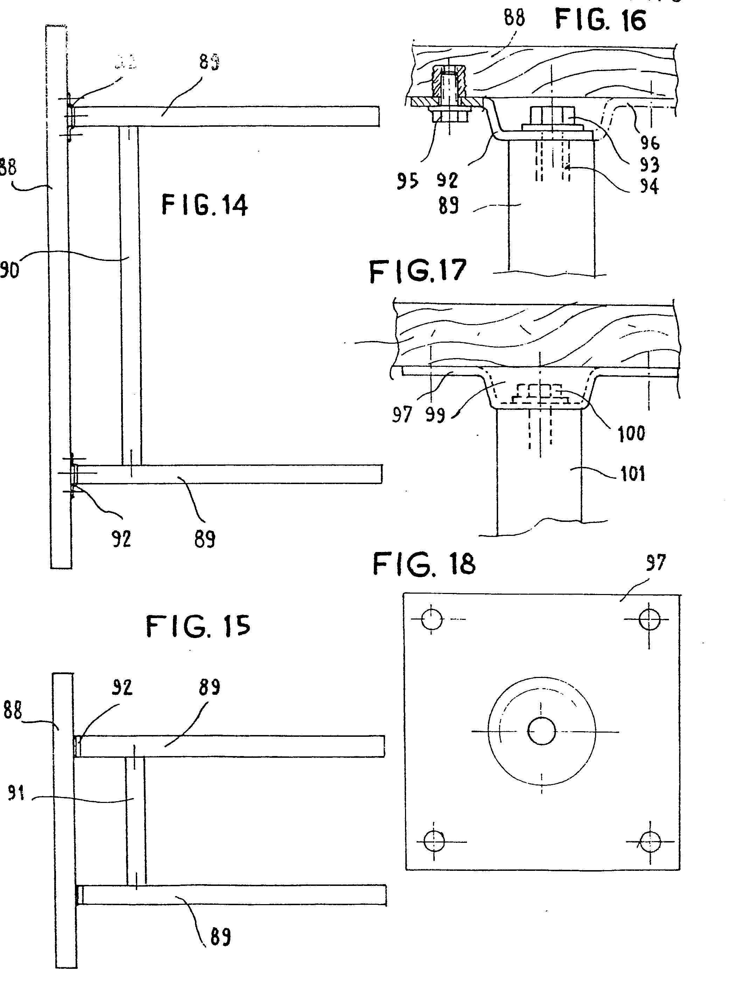

Les figures 5,7 et 6,8, représentent, en élévation et en vue de dessus, un exemple d'assemblage à coupe d'onglet selon l'invention. Du fait de sa symétrie sur deux axes perpendiculaires XX' et YY', le profilé principal peut s'assembler suivant l'un ou l'autre de ses côtés, ou en bout comme il sera vu sur les fig.12 et 13.

Dans l'assemblage à coupe d'onglet (fig.5,7) , les deux morceaux de profilé sont mis en appui sur leur coupe d'onglet du côté de la face 4, c'est-à-dire les fentes 14,15 disposées perpendiculairement au plan d'assemblage, suivant l'axe de symétrie YY'. La fixation est assurée par une vis à tête fraisée 46 engagée dans un trou 47 percé dans le profilé 48,au moyen d'un outillage spécial, sur l'intersection des plans de symétrie XX' et YY', indifféremment dans le prolongement de l'un ou l'autre des tubes, et vissée dans le taraudage d'un insert métallique 49 vissé lui-même dans le taraudage usiné dans l'extrémité du tube central 50 du profilé 51. Cette disposition permet d'utiliser les fentes 14,15 pour l'assemblage de profilés en bout. La fixation peut s'effectuer par vissage dans l'un ou l'autre des deux profilés.

Les figures 6 et 8 représentent, en élévation et en vue de dessus, un mode d'assemblage identique aux deux figures précédentes. Dans ce cas, les fentes 14,15 sont en regard suivant le plan de symétrie XX'. La vis de fixation 46a est engagée dans un trou 52 du profilé 53 au moyen d'un outillage de perçage et vissé dans le taraudage d'un insert 49 vissé lui-même dans un taraudage usiné dans l'extrémité du tube central 20 du profilé 54.

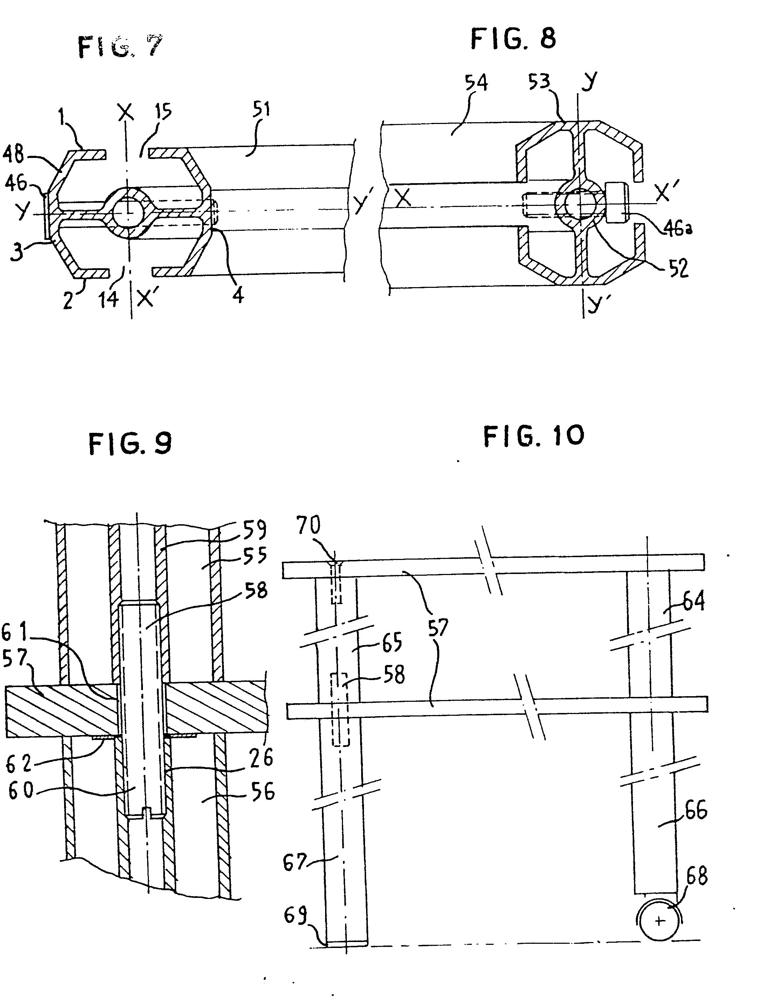

La figure 9 montre, en coupe, le mode d'assemblage de tablettes intermédiaires illustré sur la figure 10. Les profilés 55 et 56 enserrent la tablette 57 au moyen de la tige filetée 58 d'abord vissée jusqu'au fond dans le taraudage de longueur appropriée usiné dans le tube central 59 du profilé 58, de façon à former un goujon. On engage ensuite la partie libre de la tige filetée 60 dans le trou 61 de la tablette, on interpose une mince rondelle 62, en matière plastique compressible puis on visse le morceau de profilé 56 par son taraudage d'extrémité 63 jusqu'à ce qu'il soit bien serré sur la tablette, on oriente alors, au maximum d'un quart de tour, le profilé 56 sur le profilé 57 en comprimant la rondelle 62. Ce mode d'assemblage permet de réaliser des tables comme dans l'exemple de la figure 10 dans lequel les profilés 64,65 font fonction d'entretoises et les profilés 66,67 constituent les pieds, lesquels peuvent recevoir une roulette 68 ou une semelle 69 emboîtée ou vissée sur le tube central. La tablette supérieure 57a est fixée par les vis 70 sur le tube central des profilés 64.

La figure 11 montre un exemple de fixation d'un profilé annexe 71 de section en forme de T. La face supérieure de la barre du T se trouve en appui sur une face 1 ou 2 du profilé principal. La perpendicularité de la fixation du profilé annexe 71 sur le profilé principal est obtenue au moyen d'une pièce 71a prise dans un profilé de section rectangulaire dont la largeur correspond à celle des fentes 14 ou 15 du profilé principal dans laquelle il est engagé. Cette pièce 71a est rendue solidaire du profilé 71 par un rivet 72. La fixation est obtenue par une pièce écrou 73 prise dans le même profilé que la pièce 71a, mais dont les extrémités 74,75, sont coupées en biais parallèlement l'une à l'autre; un trou taraudé 76 est usiné au centre de l'écrou dont la longueur, sur les arêtes extrêmes des coupes biaises, est légèrement supérieure à la largeur interne 21 (fig.1) du profilé principal sur les épaulements 16,17 et 18,19, de telle sorte que lorsqu'il est introduit dans l'une des fentes 14,15 et mis en appui sur les faces internes des bords 10,11 et 12,13 du profilé principal, il pivote en se mettant en butée sur les épaulements, ce qui a pour effet de centrer la vis 76 dans l'axe YY' du profilé principal. Dans cette position, l'écrou se trouve légèrement en biais par rapport au profilé 71. A l'extrémité inférieure du profilé principal, on a mis en place un vérin 77 rendu réglable par la vis 78 et l'écrou 79.

Sur la figure 12, on a montré le mode d'assemblage en équerre de deux 0010475
morceaux de profilé principal. Un premier morceau 80, représenté verticalement et un second 81 représenté perpendiculaire au premier, en appui sur
son extrémité à coupe droite, contre une face des branches 4 ou 5 du
morceau 80. Il est à remarquer, sur la figure 1 du profilé principal, que
la hauteur 22 est égale à la longueur 23. Ainsi, dans l'assemblage représenté sur la fig.12, la largeur 22 de la portion de longueur 81 coïncide
avec les arêtes de la largeur 23 de la face d'appui des branches 4,5, ceci
pour une question d'esthétique et de robustesse de l'assemblage. La fixation est assurée par une vis 82 vissée dans le taraudage usiné dans l'extrémité de la partie tubulaire 83 du morceau 81. La vis 82 est engagée
dans un trou percé au travers de la partie tubulaire 84 et en appui par
sa tête 85 sur la partie tubulaire 84. La partie inférieure du profilé 80
reçoit une roulette 86 fixée par l'intermédiaire de son axe fileté 87 vissé
dans le tube 84.

Les figures 14 et 15 montrent un exemple de table réalisée avec le profilé
principal. Elle comporte le plateau 88 fixé sur quatre pieds 89 réunis
entre eux par des traverses 90,91 coupées dans le profilé principal. Le
plateau est fixé sur l'extrémité des pieds par l'intermédiaire de pièces
de tôle pliée 92 dont le détail sera montré sur la fig.16. La pièce 92
comporte un pliage et un contre pliage définissant deux faces parallèles
dont l'une s'appuie sur l'extrémité du profilé principal 89 et l'autre
reçoit le plateau de table 88. La fixation sur le profilé est assurée par
une vis 93 vissée dans le taraudage du tube 94 du profilé 89. Le plateau
de table 88 est fixé par une vis 95 qui peut, soit être vissée directement
dans le plateau, ou vissée dans un insert métallique inclu dans le plateau. La pièce 92 peut avoir éventuellement un second pliage 96 représenté
en traits fins pointillés dans le cas ou le piètement doit être plus
robuste.
Sur les figures 17 et 18, on a représenté une pièce métallique 97 destinée
à fixer solidement des pieds de table indépendants les uns des autres. Elle
se présente sous forme d'une plaque carrée ou de toute autre forme compatible, munie d'au moins trois à quatre trous de fixation du plateau 98, et,
en son centre, d'un embouti 99 dans lequel est percé un trou recevant une
vis de fixation 100 vissée dans la partie tubulaire du profilé 101. La
profondeur de l'embouti 99 est supérieure à l'épaisseur de la tête de la
vis 100 et d'une rondelle éventuelle. On peut utiliser une plaque sans
embouti, plus épaisse, dans laquelle on fraise l'emplacement d'une vis à
tête fraisée.

- 6 -

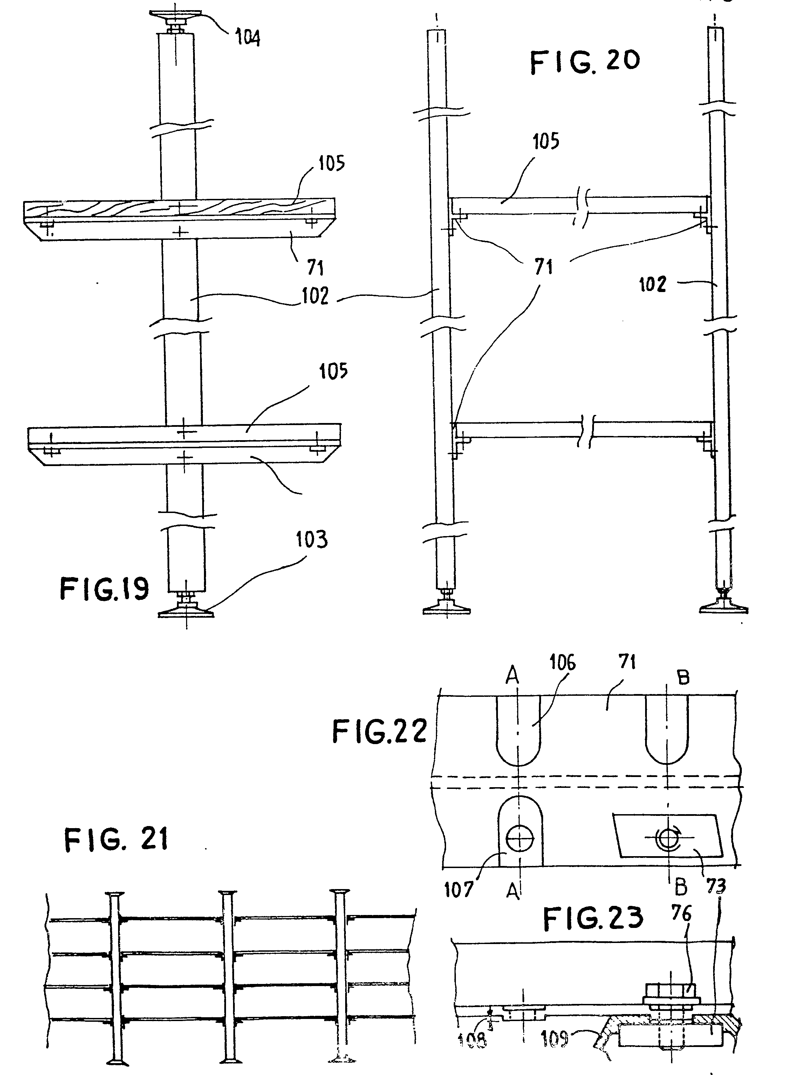

Bien entendu, ces pièces annexes peuvent être utilisées à fixer des panneaux de meubles autres que des plateaux de table. Le profilé principal 102, fig.19 et 20, peut servir, en coopération avec deux vérins 103, 104, disposés à chacune de ses extrémités , en appui sur le plancher et le plafond, à constituer un rayonnage simplifié grâce à un profilé 71 (fig.11) coupé à longueur et fixé comme il est montré sur cette figure pour faire fonction d'étagère 105.

Les étagères sont préférablement fixées sur les profilés 71, ce qui entretoise les profilés 102 entre eux et rigidifie le rayonnage.

Sur la figure 21, on a montré le schéma d'une réalisation de rayonnage. On voit que les profilés faisant fonction de poteaux peuvent être placés à un écart fonction de la charge à supporter et qu'ils peuvent recevoir des profilés 71 sur leurs faces d'appui 1 ou 2, ceci pour obtenir des rayonnages continus. Bien entendu, cet ensemble pourrait être renforcé avec des traverses de liaison au moyen du profilé principal fixé comme sur les figures 12 et 13.

Les figures 22 et 23 montrent une variante de centrage au moyen de découpes partielles 106,107, non débouchantes, d'une épaisseur de dépassement 108 inférieure à l'épaisseur de la toile d'appui correspondante du profilé principal, suivant la coupe BB, pour éviter que l'écrou 73 ne prenne appui sur cette toile 109.

Tous ces profilés sont réalisés en alliage d'aluminium filé à la presse.

REVENDICATIONS

1 - Ensemble de profilés et pièces annexes dans lequel le profilé principal, de section ouverte, réalisé par filage à la presse en barres d'alliage léger, s'assemble par morceaux pour former des structures à vocations diverses, coopérant avec des pièces annexes d'habillage, caractérisé en ce que le profilé principal, de section droite en forme de H, présente deux axes de symétrie perpendiculaires l'un à l'autre XX' et YY' se croisant sur l'axe d'un tube central (20) sur lequel se raccordent deux ailes (3a,3b) situées dans le prolongement l'une de l'autre et sur l'axe de symétrie XX', l'ensemble formant l'âme du profilé principal, en ce que les ailes (4,5) de la section en H sont repliées chacune à leur extrémité (10,11 et 12,13) et forment deux faces d'appui (1,2) parallèles entre elles et parallèles à l'âme (3) située sur l'axe de symétrie XX', en ce que les deux faces d'appui (1,2) comportent chacune une fente longitudinale de même largeur (14,15) disposée symétriquement à l'axe XX', en ce que l'épaisseur de la paroi des faces d'appui comportant les fentes (14,15) est d'épaisseur constante et parallèle et, symétriquement à l'axe XX', définit un logement interne de largeur (21), limité par des épaulments (16,17), en ce que le profilé comporte plusieurs variantes de forme et coopère avec des profilés de fermeture des fentes et avec un profilé de section en forme de T équipé de moyens de centrage et de fixation sur les fentes (14,15).

2 - Ensemble de profilés selon 1, dans lequel la largeur (23) sur les deux faces d'apui (1,2) est égale à l'épaisseur du profilé (22).

3 - Ensemble de profilés selon 1 et 2, dans lequel la réalisation d'ossatures s'effectue par l'assemblage de morceaux de profilé (80,81) dont l'extrémité à coupe droite de l'un, s'appuie sur la face d'appui (1 ou 2) de l'autre, du côté de sa largeur (22), la fixation est assurée au moyen d'une vis (82) traversant un trou percé suivant l'axe du tube central (83) et vissée dans le taraudage usiné dans l'extrémité du tube central de l'autre profilé.

4 - Ensemble de profilés selon 1, dans lequel la réalisation d'ossatures s'effectue par assemblage à coupe d'onglet de morceaux de profilé principal, la coupe d'onglet est usinée pour permettre l'assemblage suivant le plan de symétrie XX' mettant les fentes en regard.

5 - Ensemble de profilés selon 1, dans lequel la coupe d'onglet est usinée pour permettre l'assemblage suivant le plan de symétrie YY', la fixation est assurée au moyen d'une vis (46) engagée dans un trou (47) percé dans le profilé sur l'intersection des plans de symétrie XX' et YY' du profilé à assembler, et vissée dans le taraudage usiné dans un insert métallique (49) lui-même vissé dans le taraudage usiné dans l'extrémité du tube central de l'autre profilé.

6 - Ensemble de profilés dans lequel le profilé annexe (71), de section en T, comporte une pièce de centrage rapportée (71a) solidarisée à la face supérieure de la barre du T, ledit profilé est fixé sur le profilé principal par une vis (76) et un écrou (73) coopérant avec la pièce de centrage (71a).

7 - Ensemble de profilés selon 1 et 6, dans lequel le profilé annexe (71) reçoit, à l'endroit de sa fixation sur le profilé principal, un découpage non débouchant (106,107) orienté perpendiculairement à la longueur du profilé en définissant, sur au moins un côté de la face d'appui, un bossage de centrage de largeur correspondant à celle de la fente du profilé principal (14,15), un trou est percé au travers du profilé en T,dans l'axe des bossages de centrage, pour recevoir une vis(76) coopérant avec l'écrou de fixation (73) de la largeur de la fente (14,15) dans laquelle il est engagé et dont la longueur, limitée par deux coupes biaises parallèles, est légèrement supérieure à celle (21) du logement interne (16,17 et 18,19) du profilé principal.

8 - Ensemble de profilés selon 1, dans lequel ils sont utilisés comme montants formant des entretoises entre lesquelles on fixe des tablettes intermédiaires parallèles (57), au moyen d'une tige filetée (58) vissée dans le taraudage usiné dans l'extrémité du tube central d'un premier profilé, la tablette comporte des trous (61) dans lesquels on engage l'extrémité des tiges filetées (58), puis on interpose une rondelle mince en matière plastique (62) susceptible de se comprimer, le second profilé est vissé et serré sur la tablette et orienté sur le premier profilé par compression de la rondelle (62), la tablette ou le plateau supérieur (57) est fixé sur le profilé au moyen d'une vis (70) préférablement à tête fraisée, engagée dans le trou de la tablette et vissée dans le taraudage usiné dans l'extrémité du tube central du profilé.

9 - Ensemble de profilés selon l'une quelconque des revendications précédentes 1,2,3,4 et 5, dans lequel la section est de forme extérieure cylindrique en coopération avec les profilés de fermeture de forme complémentaire (38) verrouillés sur les fentes de celui-ci.

10 - Ensemble de profilés selon l'une quelconque des revendications précédentes 1,2,4 et 5, dans lequel la section du profilé principal est de forme extérieure carrée (39) ou rectangulaire en coopération avec les profilés de fermeture (40,41) de forme complémentaire, verrouillés sur les fentes de celui-ci.

11 - Ensemble de profilés selon l'une quelconque des revendications précédentes 1,3,9 et 10, dans lequel les fentes (14,15 et 34,35) sont fermées par un profilé annexe de fermeture (25,38,40,41) constitué d'une âme dont les extrémités sont prévues pour s'appuyer sur les extrémités des faces (1,2,32,33) des profilés principaux en ménageant un espace (42,43) permettant d'allonger les ailettes d'assemblage et de verrouillage élastique (26,27 - 36,37 et 44,45) engagées et verrouillées contre le bord des fentes de ces profilés principaux.

12 - Ensemble de profilés selon 1,9 et 10, dans lequel les pièces annexes comprennent une pièce de fixation de panneaux constituée par une plaque métallique (92) comportant au moins un pliage et un contre pliage définissant deux faces parallèles dont l'une s'appuie sur l'extrémité du profilé principal et reçoit un trou de fixation dans lequel est engagée une vis se vissant dans le taraudage usiné dans l'extrémité du profilé principal, l'autre face reçoit un trou dans lequel est engagé une vis de fixation du panneau comportant ou non un insert métallique taraudé.

13 - Ensemble de profilés selon 1,9 et 10, dans lequel la pièce de fixation des panneaux est une plaque de tôle comportant en son centre un trou fraisé ou un embouti local percé d'un trou de vis de fixation sur le profilé, et plusieurs trous de fixation du panneau.

0010475

**FIG.2**

**FIG.3**

**FIG.4**

**FIG.5**

**FIG.6**

0010475

**FIG. 12**

**FIG. 11**

**FIG.11**

**FIG.13**

P.P. Adajoux

0010475

FIG. 16

88

FIG.14

89

88

90

92      89

95  92
89

FIG.17

97  99

96
93
94

100

101

FIG. 15

FIG. 18      97

88

92      89

91

89

P.P. Adejoint

0010475

FIG. 20

FIG.19

FIG. 22

FIG. 21

FIG.23